## Europäisches Patentamt

## European Patent Office

## Office européen des brevets

(19)

(11) Veröffentlichungsnummer: **0 244 849**
**B1**

(12) **EUROPÄISCHE PATENTSCHRIFT**

(45) Veröffentlichungstag der Patentschrift:
**19.09.90**

(21) Anmeldenummer: **87106563.7**

(22) Anmeldetag: **06.05.87**

(51) Int. Cl.⁵: **B30B 11/20**, B01J 2/20

(54) Granuliervorrichtung mit einer gelochten Hohlwalze.

(30) Priorität: **09.05.86 DE 3615677**

(43) Veröffentlichungstag der Anmeldung:
**11.11.87 Patentblatt 87/46**

(45) Bekanntmachung des Hinweises auf die Patenterteilung:
**19.09.90 Patentblatt 90/38**

(84) Benannte Vertragsstaaten:
**AT BE CH DE ES FR GB GR IT LI LU NL SE**

(56) Entgegenhaltungen:
**EP-A- 0 166 200**
**DE-A- 1 454 887**
**DE-C- 570 100**
**GB-A- 455 733**
**NL-A- 8 204 241**
**US-A- 1 804 283**
**US-A- 2 063 404**
**US-A- 2 234 595**

**PATENT ABSTRACTS OF JAPAN, Band 10,**
**Nr. 100 (M-470)[2157], 16. April 1986; &**
**JP-A-60 234 798 (KYOKUTO KAIHATSU KOGYO**
**K.K.) 21-11-1985**

(73) Patentinhaber: **Santrade Ltd., Alpenquai 12 P.O. Box 321, CH-6002 Luzern(CH)**

(72) Erfinder: **Froeschke, Reinhard, Ulrichstrasse 69, D-7056 Weinstadt 1(DE)**

(74) Vertreter: **Wilhelm, Hans-Herbert, Dr.-Ing. et al, Wilhelm & Dauster Patentanwälte Hospitalstrasse 8, D-7000 Stuttgart 1(DE)**

## Beschreibung

Die Erfindung betrifft eine Granuliervorrichtung nach dem Oberbegriff des Patentanspruches 1.

Es sind Granuliervorrichtungen bekannt (DE-B-12 87 045), die beispielsweise bei der Verarbeitung von Zuckerbrei zu Granulat, oder bei der Erzeugung von Futtermitteln Anwendung finden. Dort wird eine rotierende Hohlwalze vorgesehen, der an diametral gegenüberliegenden Innenwandteilen, die etwa in einer Horizontalebene liegen, zwei Anpreßrollen zugeordnet sind, die dazu dienen sollen, das in axialer Richtung dem Inneren der Hohlwalze zugeführte, zu verarbeitende Material im Bereich zwischen der angetriebenen Hohlwalze und der Anpreßrollen durch die Öffnungen in der Hohlwalze herauszudrücken. Dabei wird zwischen den Anpreßrollen und dem nach innen weisenden Umfang der Hohlwalze ein Spalt vorgesehen. Die in diesem Spalt auftretenden höheren Drücke reichen aus um das Material in Granulatsträngen durch die Öffnungen nach außen zu drücken. Am Außenumfang der Hohlwalze liegt ein Messer an, mit dem die Granulatstränge in geeignete Längen zerlegt werden.

Granuliervorrichtungen dieser Art weisen den Nachteil auf, daß sie zum einen nicht für alle zu granulierenden Massen eingesetzt werden können. Relativ dünnfließende Massen lassen sich auf diese Weise nicht verarbeiten, weil nicht verhindert werden kann, daß solche Massen zumindestens teilweise selbsttätig aus den Öffnungen der rotierenden Hohlwalze austreten. Nachteilig ist auch, daß eine Dosierung der ausgepreßten Massen nicht oder nur sehr grob mit Hilfe des Abschabemessers möglich ist.

Es sind zum Granulieren, insbesondere von zum Vertropfen neigenden Massen, daher auch andere Einrichtungen mit rotierenden gelochten Hohlzylindern vorgesehen worden (DE-C 29 41 802), bei denen die zu verarbeitende Masse aufgrund eines gewissen Druckes durch eine feststehende Reihe von Öffnungen hindurchgedrückt und aufgrund der intermittierend daran vorbeigeführten Öffnungen in einem gelochten Zylinder auf ein darunter vorgesehenes Kühlband in Tropfenform austritt. Diese sogenannten Tropfenformer haben sich in der Praxis als sehr vorteilhaft erwiesen, sind aber zum Auspressen von zähen Massen mit gewissen Nachteilen behaftet. Es wird mit solchen Einrichtungen auch nicht möglich, unabhängig von der zu granulierenden Masse stets Tropfen mit bestimmtem Volumen herzustellen.

Bekannt ist auch eine Vorrichtung zum Granulieren (DE-B-12 37 540) der im Oberbegriff des Patentanspruches 1 genannten Art, bei der eine feststehende, am Umfang mit axial verlaufenden Zahnleisten versehene Hohlwalze vorgesehen ist, die an ihren Stirnseiten offen ist und in einen Behälter hereinragt, in dem das zu granulierende Material als Schüttgut von oben nach unten gefördert wird. Innerhalb der feststehenden Zahnhohlwalze ist ein um die Achse dieser Hohlwalze drehbar gelagerter Doppelarm vorgesehen, der an seinen beiden Enden mit je einer gezahnten Anpreßrolle versehen ist, wobei die Zähne der Anpreßrollen der Zahnausbildung der Hohlwalze entsprechen. In einem aus dem Zuführbehälter unten herausragenden Teilumfangsbereich ist die Hohlwalze gelocht, wobei die Löcher sowohl jeweils im Zahngrund der Zahnleisten, als auch an den radial am weitesten nach innen ragenden Stellen der Zahnleisten vorgesehen sind. Das zu granulierende Material tritt bei jener Vorrichtung in Würstchenform aus den Löchern aus. Der Nachteil einer solchen Bauart, bei der die umlaufenden Anpreßrollen mit hoher Geschwindigkeit umlaufen und auch zu mehreren vorgesehen sein können, besteht darin, daß eine Dosierung des in Würstchenform austretenden Materials nicht möglich ist. Es ist auch nicht möglich, mit der dort gezeigten Bauart das Material in Tropfenform zu granulieren und diesen Tropfen jeweils ein gleichgroßes Volumen zu geben. Die bekannte Bauart eignet sich daher nicht für alle Einsatzzwecke, bei denen es auf eine Granulierung zur Pillenform ankommt und bei denen eine volumetrische Bestimmung des Volumens der einzelnen Pillen notwendig ist, wie das beispielsweise in der pharmazeutischen Industrie der Fall ist.

Bekannt ist schließlich auch eine Granuliervorrichtung nach dem Oberbegriff des Patentanspruches 1 (DE-U 1 796 248), bei der eine gelochte Trommel an ihrem Innenumfang mit axial verlaufenden Leisten versehen ist, in deren Zwischenräume Preßleisten eines im Inneren der Trommel exzentrisch gelagerten Preß- und Knetrades eingreifen, das durch die angetriebene Trommel mitgenommen wird. Wird daher eine pastenartige Masse axial in die Trommel eingeführt, so kann sie mit Hilfe eines Einstreichbleches in die durch die Leisten gebildeten Zwischenräume eingestrichen werden, so daß die Masse dann durch den Eingriff der Preßleisten des Preß- und Knetrades aus den Öffnungen der Trommel nach außen gedrückt wird, wobei durch ein Verschieben des Preß- und Knetrades auch die Möglichkeit besteht, den Preßdruck und damit die Länge der würstchenartig aus den Löchern austretenden Formlinge zu bestimmen. Die so herausgedrückten Formlinge werden dann durch einen Schaber vom Außenumfang der gelochten Trommel gelöst und fallen ungeordnet auf ein darunter vorbeigeführtes Förderband. Auch eine solche Einrichtung kann nicht für alle zu granulierenden Massen eingesetzt werden, insbesondere nicht für relativ dünnfließende Massen. Auch die Dosierung läßt sich nicht einwandfrei durchführen, weil bei dünnfließenden Massen nicht die Gewähr dafür gegeben ist, daß alle dem Preßbereich zugeführten Löcher, die vorher durch den Schaber außen gereinigt worden sind, beim Erreichen des Preßbereiches vollkommen leer sind und daher einen neuen Verstopfvorgang in dosierter Weise erlauben. Möglichkeiten zur Beeinflussung der Zähigkeit der auszupressenden Massen sind dort nicht vorgesehen.

Der Erfindung liegt daher die Aufgabe zugrunde, eine Granuliervorrichtung der eingangs genannten Art so auszubilden, daß sie zur Verarbeitung insbesondere von zähen Massen gut geeignet ist und daß sie auch die genau zu dosierende Mengen der Granulatform des zu verarbeitenden Materials zu erreichen erlaubt.

Die Erfindung besteht bei einer Granuliervorrichtung der eingangs genennten Art in den kennzeichnenden Merkmalen des Anspruches 1.

Diese Ausgestaltung bringt den großen Vorteil mit sich, daß sich zwischen den korrespondierenden Zahnleisten im Eingriffsbereich definierte und von den Zahnflanken abgeschlossene Volumina bilden, die dann zwangsweise aus der Lochreihe herausgedrückt werden. Durch die Wahl der Zahnform bzw. durch die Wahl des Abstandes der ineinandergreifenden Zahnleisten, läßt sich so ein definiertes Volumen der auszupressenden Granuliertropfen vorbestimmen. So ist es beispielsweise durch Auswechseln von Zahnleistenringen möglich, eine Umstellung auf ein anderes Material oder auf eine andere Tropfengröße zu bewirken. Vorteilhaft ist es aber auch, die Zahnleisten mit einem Querschnitt einer Evolventenverzahnung zu versehen, weil dann durch Verstellung des Abstandes der Walzenachsen, die vorzugsweise in einer Vertikalebene übereinanderliegen, auch das Volumen der zwischen den Zahnleisten eingeschlossenen Räume beeinflußt werden kann.

Vorteilhaft ist auch, daß das zu granulierende Material über eine axial in die Hohlwalze hereinreichende Zuführeinrichtung, beispielsweise in der Form eines Rohres mit Austrittsschlitzen oder Austrittsbohrungen, definiert in den Bereich zugeführt wird, der durch den sich in Drehrichtung verjüngenden Spalt zwischen Hohlwalze und Anpreßrolle gebildet wird. Diese Ausgestaltung nämlich ermöglicht es, auch relativ dünnfließendes Material der Einrichtung definiert in dem Bereich zuzuführen, in dem das Vertropfen geschehen soll. Der Nachteil eines unkontrollierten und auch unerwünschten Austretens an anderen Stellen der gelochten Hohlwalze kann so verhindert werden. Das durch die Zuführeinrichtung eingeführte Material kann in seiner Menge auf die auszupressende Menge abgestimmt werden.

Die neue Einrichtung weist auch den Vorteil auf, daß die ineinandergreifenden Zahnreihen, wenn die Achsen der Walzen in einer Vertikalebene angeordnet sind, in dieser Vertikalebene das geringste Volumen zwischen sich besitzen. In diesem Punkt wird daher auch das Auspressen erfolgen. Während bis zur Vertikalebene das Volumen, das zwischen den Zahnleisten eingeschlossen ist, abnimmt, nimmt es im Verlauf der Weiterdrehung beider Walzen wieder zu. Das führt zumindestens in einem gewissen Bereich hinter der Vertikalebene dazu, daß ein gewisser Ansaugeffekt auf die Lochreihen in der äußeren Hohlwalze ausgeübt wird. Dies wiederum bringt den Vorteil mit sich, daß außer dem zwangsweise herausgedrückten Material kein weiteres Material aus den Austrittslöchern an Stellen heraustritt, wo es nicht erwünscht ist. Im übrigen wird der äußeren Hohlwalze eine Heizhaube im oberen Bereich zugeordnet, die dazu dient, etwa noch in den Löchern verbliebenes Material wieder zu erhitzen und zum Zurückfließen in den Spalt zu veranlassen. Die Zuführeinrichtung selbst kann daher auch mit einer Auffangplatte für herunterund zurücktropfendes Material versehen oder selbst als solche ausgebildet sein.

Weitere Vorteile ergeben sich aus den Unteransprüchen sowie aus der nachfolgenden Beschreibung eines Ausführungsbeispieles der Erfindung, das in der Zeichnung dargestellt ist. Es zeigen:

Fig 1 eine schematische Darstellung des erfindungsgemäßen Granuliervorganges,

Fig. 2 einen Querschnitt durch eine Einrichtung zum Granulieren nach dem Prinzip der Fig. 1 und

Fig. 3 einen Längsschnitt durch die Granuliervorrichtung der Fig. 2.

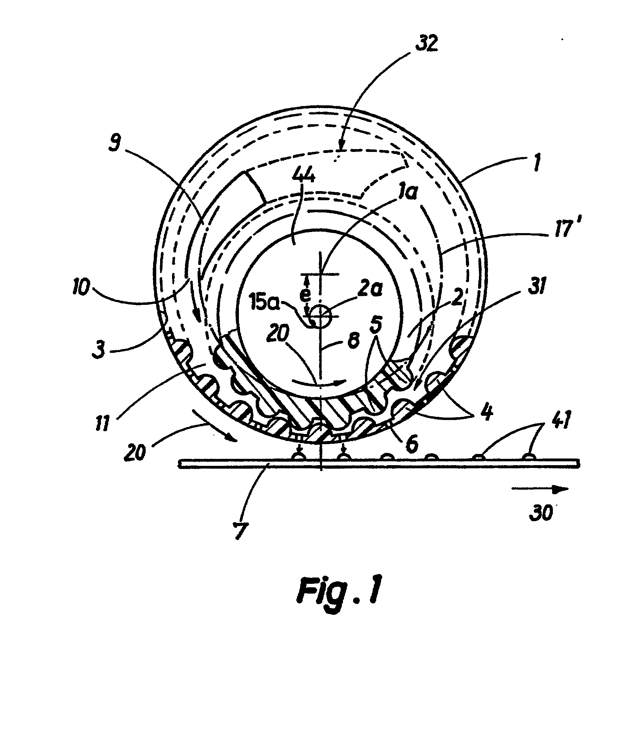

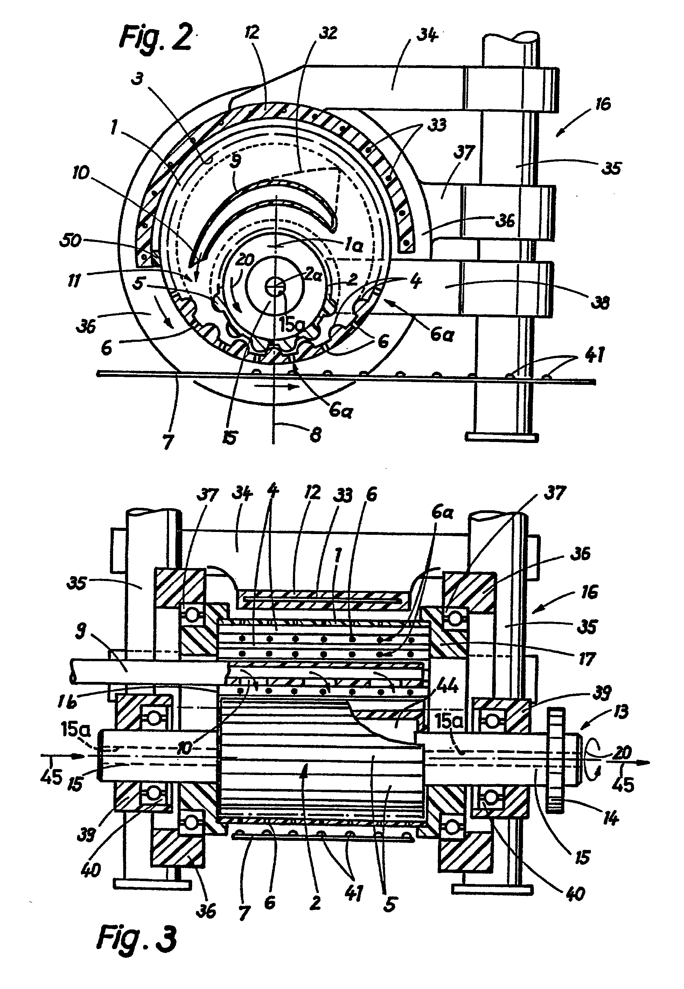

In der Fig. 1 ist eine auf ihrem gesamten Umfang mit Löchern (6) versehene Hohlwalze (1) gezeigt, die in nicht näher dargestellter Weise um ihre Achse (1a) drehbar gelagert ist. Im Inneren der Hohlwalze (1) ist eine Anpreßrolle (2), in der Form eines Hohlzylinders mit der Achse (2a) vorgesehen, wobei die Achse (2a) der Anpreßrolle (2) in einer gemeinsamen Vertikalebene (8) mit der Achse (1a) der Hohlwalze (1) liegt. Die Löcher (6) in der Hohlwalze (1) sind, wie näher anhand von Fig. 3 zu erkennen sein wird, jeweils in axial verlaufenden Reihen angeordnet und befinden sich jeweils am Zahngrund zwischen zwei ebenfalls axial verlaufenden Zahnleisten (4), die dem Innenumfang der Hohlwalze (1) zugeordnet sind. In analoger Weise ist der Außenumfang der Anpreßrolle (2) mit Zahnleisten (5) versehen, die korrespondierend zu den Zahnleisten (4) der Hohlwalze (1) ausgebildet sind und die daher in die Zahnleisten (4) beim Abwälzvorgang des Umfanges der Anpreßrolle (2) an der Innenwand (3) der Hohlwalze (1) eingreifen. Zu diesem Zweck ist die Anordnung so getroffen, daß in Abhängigkeit von dem Durchmesser der Anpreßrolle (2) und dem Innendurchmesser der Hohlwalze (1) die Achsen (1a) und (2a) um den Abstand (e) exzentrisch angeordnet sind, und zwar so, daß die Zahnleisten (4) und (5) im untersten Bereich des Umfanges der Hohlwalze (1) miteinander in Eingriff kommen. Unterhalb der Hohlwalze (1) wird ein Förderband, im Ausführungsbeispiel in der Form eines Kühlbandes (7), vorbeigeführt, dessen Bewegungsrichtung (30) tangential zu der Drehrichtung (20) der Hohlwalze (1) erfolgt und dessen Geschwindigkeit auf die Drehgeschwindigkeit der Hohlwalze (1) abgestimmt ist.

In den Zwischenraum zwischen Anpreßrolle (2) und Hohlwalze (1) ist eine Zuführeinrichtung (9) eingesetzt, die beispielsweise, wie noch anhand der Fig. 2 und 3 erläutert werden wird, axial in die Hohlwalze (1) herein reicht. Die Zuführeinrichtung (9) ist mit einem oder mehreren Austrittsschlitzen oder Austrittsbohrungen (10) versehen, durch die das zu granulierende Material gezielt in den Spalt (11) zwischen Anpreßrolle (2) und Hohlwalze (1) hereingegeben wird, der sich in der Drehrichtung (20) verjüngt. Es wird deutlich, daß das auf diese Weise in den Bereich zwischen den Zahnleisten (4) und (5) hereingebrachte fließfähige Material, zunächst von den Zahnleisten (4) der Hohlwalze (1) mitgenommen wird und dann durch das Ineinandergreifen der Zahnleisten (4) und (5) zwangsweise durch die axialen Lochreihen herausgedrückt wird, und zwar ausschließlich in dem Bereich der Vertikalebene (8), wo der Zwischenraum zwischen den Zahnleisten (4) und (5) jeweils das kleinste Volumen aufweist. Da dieses Volumen durch das Ineinandergreifen der Zahnleisten (4) und (5) vorbestimmbar ist, läßt sich mit der neuen Einrichtung auch das Volumen der aus den Löchern zwangsweise austretenden Masse bestimmen. Die neue Einrichtung kann daher durch das formschlüssige Abwälzen definiert werden. Durch diese neue Ausgestaltung wird daher ein volumetrisches Auspressen bei hoher Geschwindigkeit ermöglicht. Es hat sich gezeigt, daß mit der neuen Einrichtung granulierte Produkte sich besonders für die pharmazeutische Industrie eignen. Dabei wird auch der Vorteil erzielt, daß die im Bereich der Vertikalebene (8) zwangsweise herausgedrückte Masse durch den sich in der Drehrichtung (20) hinter der Vertikalebene (8) bildenden Spalt (31), der sich in der Drehrichtung erweitert, an dem unerwünschten Heraustropfen aus den Löchern (6) gehindert wird. Im Bereich des Spaltes (31) nämlich wird sich ein gewisser Unterdruck einstellen, der dazu führt, daß etwa noch in den Löchern (6) vorhandenes Material größtenteils in das Innere der Hohlwalze zurückgezogen wird. Dieses Material kann dann bei der weiteren Drehung der Hohlwalze (1) im oberen Bereich erwärmt werden und wird dann, wenn es auf der Oberfläche der Zuführeinrichtung (9) oder auf dem gestrichelt angedeuteten plattenförmigen Auffangteil (32) auftrifft, wieder dem Spalt (11) zugeführt, zu dem es über die Auffangplatte und die Zuführeinrichtung (9) zurückfließt. Da durch die Zuführeinrichtung (9) stets nur so viel Material zugeführt werden kann, wie im Bereich der Vertikalebene (8) nach unten auf das Kühlband (7) austritt und dort zu festen Tropfen erstarrt, kann auch ein unerwünschtes Austreten von zu granulierender Masse an beliebigen Stellen des Umfanges der Hohlwalze (1) verhindert werden.

Die Fig. 2 und 3 zeigen eine Möglichkeit einer praktischen Ausführungsform der neuen Granuliervorrichtung. Es ist zu erkennen, daß die äußere Hohlwalze (1) an ihrer Innenwand mit den axial über die gesamte axiale Länge durchlaufenden Zahnleisten (4) versehen ist und daß sich jeweils im Zahnfuß zwischen zwei benachbarten Leisten (4) die Lochreihen (6a) der Löcher (6) befinden. Die in dieser Hohlwalze (1) geführte und in ihrer Länge auf die axiale Länge der Hohlwalze (1) abgestimmte Anpreßrolle (2) weist an ihrem Außenumfang die axial verlaufenden Zahnleisten (5) auf, die unten in der in der Fig. 1 oder in Fig. 2 gezeigten Weise mit den Zahnleisten (4) der Hohlwalze (1) in Eingriff kommen. Die Hohlwalze (1) ist mit ihren beiden Stirnseiten in Halteringe (17) eingesetzt, die eine solche radiale Erstreckung haben, daß sie zumindestens, wie in Fig. 1 durch die strichpunktierte Kreislinie (17') angedeutet ist, die Stirnseite zwischen den ineinandergreifenden Zahnleisten (4) und (5) abdecken. Im Auspreßbereich ist daher die zu granulierende Masse zwischen den Zahnleisten (4) und (5) und stirnseitig zwischen der Halterung (17) eingeschlossen. Sie wird daher zwangsweise aus der Hohlwalze (1) herausgedrückt. Da die Halterung (17) einen Ring bildet, der nicht die gesamte Stirnseite der Hohlwalze (1) abdeckt, ist es möglich, durch den offen bleibenden Teil der Stirnseite (1b) die Zuführeinrichtung (9) in der Form eines Rohres in das Innere der Hohlwalze hereinzuführen und dieses Rohr, das sich im Inneren zur Düsenform aufweiten kann oder bereits von vornherein diesen Querschnitt besitzt, mit den Austrittsschlitzen (10) zu versehen, die beim Ausführungsbeispiel die Form von drei verhältnismäßig breiten Schlitzen aufweisen. Der im Inneren der Hohlwalze (1) vorhandene Teil der Zuführeinrichtung (9) reicht mit den Schlitzen (10) in den Bereich vor dem sich verjüngenden Spalt (11), wie dies in Fig. 1 schematisch angedeutet war. Die Zuführeinrichtung (9) kann als Auffangwand für etwa im oberen Bereich von der Hohlwalze nach innen tropfendes Material ausgebildet werden. Um ein Zurücklaufen in den Spalt (11) zu gewährleisten, kann die Zuführeinrichtung (9) mit einer Auffangplatte (32) versehen sein oder von vornherein die Form einer solchen Auffangplatte aufweisen.

Dem oberen Bereich der Hohlwalze ist eine Heizhaube (12) zugeordnet, die, wie in Fig. 2 schematisch angedeutet ist, durch axial verlaufende Strömungskanäle (33) mit Dampf oder anderen Heizmedien beheizt werden kann. Natürlich ist auch eine elektrische Aufheizung möglich. Diese Heizhaube (12) überdeckt etwa die Hälfte des Umfanges der Hohlwalze (1). Die Heizhaube (12) ist mit Hilfe einer Halterung (34) fest an zwei seitlichen dem Kühlband (7) zugeordneten Tragsäulen (35) eines Gestelles (16) angebracht. Sie besitzt in ihrem - in Drehrichtung der Hohlwalze (1) gesehen - hinteren Endbereich eine Einweiseinrichtung, z. B. in Form einer Stauleiste (50), mit der evtl. noch außen anhaftendes Material mechanisch in das Innere der Hohlwalze (1) zurückgedrückt wird.

Ebenfalls an diesen Säulen (35) angebracht sind Lagerringe (36) für jeweils beidseitig an den Abschlußringen (17) angeordnete Kugellager (37). Die Lagerringe (36) sind mit Hilfe der Halterung (34) an den Säulen (35) angebracht.

Schließlich ist mit Hilfe einer Halterung (38) auch noch je ein Lagerring (39) an den Säulen (35) in der Höhe verstellbar befestigt, der Kugellager (40) zur Drehlagerung der Wellenstummel (15) trägt, die beidseitig fest an der Hohlzylinderförmigen Anpreßrolle (2) angebracht sind. Dem rechten Wellenstummel (15) ist dabei ein Antriebsritzel (14) für einen nicht näher gezeigten Antrieb (13) gezeigt der, beispielsweise über ein weiteres Ritzel, das Antriebsritzel (14) antreibt und in Drehrichtung (20) versetzt. Durch den Eingriff der Zahnleisten (5) mit dem Zahnleisten (4) der Hohlwalze (1) wird die Hohlwalze (1) von der Anpreßrolle (2) mit angetrieben. Natürlich wäre es auch möglich, die Hohlwalze anzutreiben und die Anpreßrolle (2) mitlaufen zu lassen. Mit der neuen Einrichtung werden Tropfen (41) definierten Volumes auf das Kühlband (7) aufgegeben, die dort zu festen Teilchen - vorzugsweise in der Form von halbkugelähnlichen Linsen - erstarren.

Da die Anpreßrolle (2) einen Hohlraum (44) aufweist, können beide Wellenstummel (15) auch mit axialen Bohrungen (15a) versehen werden, durch die ein fluides Heizmedium im Sinne der Pfeile (45) in den Hohlraum (44) hinein und wieder aus diesem herausgeführt werden kann. Die Anpreßrolle (2) läßt sich dadurch beheizen, was zur Temperierung der auszupressenden Masse ausgenutzt werden kann. Natürlich ist es auch denkbar, im Hohlraum (44) oder an den Wänden der Anpreßrolle (2) eine andere Beheizung, z. B. durch elektrische Heizdrähte o.dgl. vorzusehen. Die Beheizung durch ein Strömungsmedium, dessen Temperatur in einem gesonderten Kreislauf geregelt werden kann, ist aber sehr einfach.

Die Hohlwalze (1) und die Anpreßrolle (2) oder auch nur die Zahnleistenringe können aus einem elastischen Werkstoff, z. B. aus einem Elastomer-Kunststoff bestehen. Die Herstellung kann dann in einfacher Weise durch Strangspritzen erfolgen.

## Patentansprüche

1. Granuliervorrichtung mit einer gelochten Hohlwalze und mit einer, im Innern der Hohlwalze exzentrisch gelagerten und an der Innenwand der Hohlwalze anliegenden Anpreßrolle, wobei die Innenwand der Hohlwalze und die Außenwand der Anpreßrolle mit jeweils axial verlaufenden, zueinander korrespondierenden Zahnleisten versehen sind, und wobei mit Hilfe der Anpreßrolle das zu granulierende Material aus der, am Zahngrund zwischen zwei benachbarten Zahnleisten gelochten Hohlwalze herausdrückbar ist, wobei die Hohlwalze (1) um ihre Achse (1a) drehbar gelagert und über ihren gesamten Umfang mit Löchern (6) versehen ist, die Anpreßrolle (2) im unteren Bereich der Hohlwalze (1) so angeordnet ist, daß die Zahnleisten (4, 5) in diesem unteren Bereich ineinandergreifen, im Bereich zwischen Hohlwalze (1) und Anpreßrolle (2) ein axial durch einen offenen Ringspalt in einer Stirnseite (1b) der Hohlwalze (1) hereinragendes Zuführrohr (9) für das zu granulierende Material vorgesehen ist, und unterhalb der Hohlwalze (1) ein Förderband (7) quer zur Achse der Hohlwalze (1) geführt ist, dadurch gekennzeichnet, daß das Zuführrohr (9) im Inneren der Hohlwalze (1) mit Austrittsschlitzen (10) versehen ist, die in den in der Drehrichtung (20) sich verjüngenden Spalt (11) zwischen Hohlwalze (1) und Anpreßrolle (2) gerichtet sind, daß der Hohlwalze (1) eine Heizhaube (12) mit Einweisvorrichtungen für außen an der Hohlwalze (1) anhaftendes Restmaterial zugeordnet ist, daß die Anpreßrolle (2) als ein beheizbarer Hohlzylinder ausgebildet ist und daß das Förderband als ein Kühlband (7) ausgebildet ist.

2. Granuliervorrichtung nach Anspruch 1, dadurch gekennzeichnet, daß die Anpreßrolle (2) als ein beidseitig mit Wellenstummeln (15) versehener Hohlzylinder ausgebildet ist, der mit Hilfe seiner Wellenstummeln (15) drehbar in einem Gestell (16) gelagert ist.

3. Granuliervorrichtung nach Anspruch 1 und 2, dadurch gekennzeichnet, daß einer der Wellenstummel (15) mit einem Antriebsritzel (14) versehen ist.

4. Granuliervorrichtung nach den Ansprüchen 1 bis 3, dadurch gekennzeichnet, daß die Hohlwalze (1) als ein seitlich in einer drehbaren Halterung (17) gelagerten Zylinder ausgebildet ist, der an demselben, dem Kühlband (7) zugeordneten Gestell (16) wie die Anpreßrolle (2) gelagert ist.

5. Granuliervorrichtung nach einem der Ansprüche 1 bis 4, dadurch gekennzeichnet, daß die Zahnleisten (4, 5) den Querschnitt einer Evolventenverzahnung aufweisen.

## Claims

1. A granulator with a perforated hollow roller and with a pressure roller mounted eccentrically inside the hollow roller and applying on the inner wall of the hollow roller, the inner wall of the hollow roller and the outer wall of the pressure roller being respectively provided with axially-extending mutually corresponding toothed strips, and, with the aid of the pressure roller, the material to be granulated being able to be pressed out of the hollow roller perforated at the roots of the teeth between two adjacent toothed strips, the hollow roller (1) being mounted rotatable around its axis (1a) and provided with holes over its entire circumference, the pressure roller (2) being arranged in the bottom area of the hollow roller (1) in such a manner that the toothed strips (4, 5) engage one into the other in this bottom area, there being provided in the area between hollow roller (1) and pressure roller (2) a feed tube (9) for the material to be granulated axially protruding through an open annular slot in a front side (1b) of the hollow roller (1) and, under the hollow roller (1) a conveyor belt (7) being guided transversally to the axis of the hollow roller (1), characterized in that the feed tube (9) inside the hollow roller (1) is provided with output slots (10) which are directed towards the gap (11) between hollow roller (1) and pressure roller (2) narrowing down in the direction of rotation (20), in that a heating hood (12) with directing arrangements for residual material adhering externally on the hollow roller (1) is associated with the hollow roller (1), in that the pressure roller (2) is constructed as a heatable hollow cylinder, and in that the conveyor belt is constructed as a cooling belt (7).

2. A granulator according to claim 1, characterized in that the pressure roller (2) is constructed as a hollow cylinder provided on both sides with stub shafts (15) which, with the aid of its stub shafts (15), is rotatably mounted on a frame (16).

3. A granulator according to claims 1 and 2, characterized in that one of the stub shafts (15) is fitted with a drive pinion (14).

4. A granulator according to claims 1 to 3, characterized in that the hollow roller (1) is constructed as a cylinder laterally mounted in a rotatable holder (17), the said cylinder being mounted on the same frame (16) associated with the cooling belt (7) as is the pressure roller (2).

5. A granulator according to one of claims 1 to 4, characterized in that the toothed strips (4, 5) have the cross-section of an involute toothing.

## Revendications

1. Appareil à granuler possédant un cylindre creux perforé et un rouleau presseur monté excentriquement à l'intérieur du cylindre creux et appliqué contre la paroi interne du cylindre creux, appareil dans lequel la paroi interne du cylindre creux et la paroi externe du rouleau presseur sont pourvues de nervures formant des dents orientées axialement et mutuellement correspondantes, et dans lequel, à l'aide du rouleau presseur, le matériau à granuler peut être exprimé hors du cylindre creux, lequel est perforé dans l'entredent compris entre deux nervures voisines, le cylindre creux (1) étant monté rotatif autour de son axe (1a) et étant pourvu de perforations (6) sur toute sa périphérie, le rouleau presseur (2) étant disposé dans la partie inférieure du cylindre creux (1), de manière que les nervures (4, 5) viennent en prise les unes avec les autres dans cette partie inférieure, un tube d'alimentation (9) pour le matériau à granuler étant prévu dans la zone comprise entre le cylindre creux (1) et le rouleau presseur (2), dans laquelle ce tuyau pénètre à travers une fente annulaire ouverte dans un côté d'extrémité (1b) du cylindre creux (1), et une bande transporteuse (7) étant amenée à défiler transversalement à l'axe du cylindre creux (1) sous ce dernier, caractérisé en ce que le tube d'alimentation (9) est doté, à l'intérieur du cylindre creux (1), de fentes de sortie (10) qui sont dirigées dans l'intervalle (11) formé entre le cylindre creux (1) et le rouleau presseur (2) et qui se rétrécit dans le sens de rotation (20), qu'un capot chauffant (12), muni de dispositifs de rentrée pour du matériau résiduel adhérant extérieurement au cylindre creux (1), est coordonné à ce cylindre (1), que le rouleau presseur (2) est réalisé sous la forme d'un cylindre creux pouvant être chauffé et que la bande transporteuse est réalisée comme une bande de refroidissement (7).

2. Appareil à granuler selon la revendication 1, caractérisé en ce que le rouleau presseur (2) est réalisé comme un cylindre creux muni de tourillons (15) des deux côtés et monté rotatif dans un bâti (16) par ses tourillons (15).

3. Appareil à granuler selon les revendications 1 et 2, caractérisé en ce que l'un des tourillons (15) est équipé d'un pignon d'attaque (14).

4. Appareil à granuler selon les revendications 1 à 3, caractérisé en ce que le cylindre creux (1) est réalisé comme un cylindre monté latéralement dans un dispositif de maintien rotatif (17) monté sur le même bâti (16) que le rouleau presseur (2), bâti qui est coordonné à la bande de refroidissement (7).

5. Appareil à granuler selon une des revendications 1 à 4, caractérisé en ce que les nervures (4, 5) ont la section droite d'une denture à développante.

**Fig.1**

EP 0 244 849 B1

**Fig. 2**

**Fig. 3**